# EUROPÄISCHE PATENTSCHRIFT

(11) **EP 3 767 531 B1**
(45) Veröffentlichungstag und Bekanntmachung des Hinweises auf die Patenterteilung: **18.02.2026**
(21) Anmeldenummer: 19187163.1
(22) Anmeldetag: 19.07.2019
(51) Int. Cl.: G06V 10/40, G06V 10/75, G06V 20/66

(54) **VERFAHREN UND SYSTEM ZUM VERMESSEN UND VERIFIZIEREN VON ARZNEIMITTELPORTIONEN SOWIE COMPUTERPROGRAMMPRODUKT**
METHOD AND SYSTEM FOR MEASURING AND VERIFYING DRUG PORTIONS AND COMPUTER PROGRAM PRODUCT
PROCÉDÉ ET SYSTÈME DE MESURE ET DE VÉRIFICATION DES PORTIONS DE MÉDICAMENT AINSI QUE PRODUIT PROGRAMME INFORMATIQUE

(43) Veröffentlichungstag der Anmeldung: 20.01.2021
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- WO-A1-2014/119994
- WO-A2-02/25568
- KR-B1- 101 744 123
- US-A1- 2017 264 867
- ANONYMOUS: "Measuring Planar Objects with a Calibrated Camera - MATLAB & Simulink", 1 January 2017 (2017-01-01), pages 1 - 8, XP093007695, Retrieved from the Internet <URL:https://www.mathworks.com/help/releases/R2017b/vision/examples/measuring-planar-objects-with-a-calibrated-camera.html> [retrieved on 20221213]

## Beschreibung

Die vorliegende Erfindung betrifft ein Verfahren zum Vermessen und Verifizieren von Arzneimittelportionen, ein entsprechendes System umfassend eine Vermessungsvorrichtung, eine Speichervorrichtung und eine Verifikationsvorrichtung sowie ein Computerprogrammprodukt.

Moderne Blisterautomaten, wie sie beispielsweise in der WO 2013/034504 A1 offenbart sind, umfassen, je nach Ausbaustufe, mehrere hundert Vorrats- und Abgabestationen für Arzneimittel. In den Vorrats- und Abgabestationen ist jeweils eine Mehrzahl von Arzneimittelportionen eines bestimmten Arzneimittels gelagert, und auf Anforderung können einzelne oder mehrere Arzneimittelportionen abgegeben werden. Mit dem Blisterautomaten werden die in den Vorrats- und Abgabestationen gelagerten Arzneimittel patientenindividuell gemäß den ärztlich verordneten Einnahmezeitpunkten zusammengestellt und verblistert.

Zum Zusammenstellen der Arzneimittelportionen werden entsprechende Vorrats- und Abgabestationen zum Abgeben einer oder mehrerer vereinzelter Arzneimittelportionen angesteuert. Bei der Ansteuerung einer Vorrats- und Abgabestation wird mit einer Vereinzelungseinrichtung eine einzelne Arzneimittelportion separiert und über eine Abgabeöffnung einer Führungseinrichtung des Blisterautomaten übergeben. Mittels der Führungseinrichtung wird eine abgegebene Arzneimittelportion, gegebenenfalls unter Zwischenschaltung einer Sammeleinrichtung, einer Verpackungseinrichtung zugeführt, welche einzelne oder mehrere Arzneimittelportionen entsprechend den ärztlichen Vorgaben verpackt, bzw. verblistert.

Bei der Verblisterung mittels der Verpackungseinrichtung wird/werden eine oder mehrere Arzneimittelportion/-en in einen Blisterbeutel verpackt, der patientenindividuelle Informationen sowie Informationen zu der oder den Arzneimittelportion/-en in dem Blisterbeutel umfasst. Diese Informationen können beispielsweise auf einen speziellen Abschnitt des Blisterbeutels aufgedruckt sein. Der Blisterbeutel selbst ist üblicherweise Teil eines Blisterschlauchs, der aus dem Blisterautomaten geführt wird und zur weiteren Bearbeitung gelagert wird. Die weitere Bearbeitung der einzelnen Blisterbeutel bzw. des Blisterschlauchs umfasst es regelmäßig, dass die Blisterbeutel hinsichtlich der in ihnen angeordneten Arzneimittelportion bzw. Arzneimittelportionen überprüft werden, um sicherzustellen, dass auch die, und nur die, Arzneimittelportion bzw. -portionen in einem speziellen Blisterbeutel angeordnet ist bzw. sind, die gemäß einer Verschreibung in diesem angeordnet sein soll bzw. sollen. Die Fehlerquote hinsichtlich der Abgabe einer Arzneimittelportion einer falschen Arzneimittelart ist bei modernen Blisterautomaten sehr gering. Da die Einnahme einer falschen Arzneimittelart für einen Patienten aber ernsthafte Folgen haben kann, ist eine Nachkontrolle wesentlicher Bestandteil der Produktion der Blisterbeutel.

Um fehlerhaft bestückte Blisterbeutel zu erkennen, kann ein Blisterschlauch durch ein Kontrollgerät geführt werden, bei welchem ein Benutzer die Richtigkeit der Befüllung eines Blisterbeutels überprüft, beispielsweise indem ein Abbild des zu überprüfenden Blisterbeutels auf einem Bildschirm wiedergegeben wird und der Benutzer anhand dieser Wiedergabe und einer ebenfalls auf einem Bildschirm angezeigten Soll-Zusammenstellung prüft, ob die Befüllung der Vorgabe entspricht (also die Anzahl der vorhandenen Arzneimittelportionen, deren Erscheinungsbild und gegebenenfalls Form dem entspricht, was die Soll-Zusammenstellung vorgibt). Bei diesem Vorgang kann auch erkannt werden, wenn Arzneimittelportionen durch den Vereinzelungsvorgang zerbrochen und beschädigt in den Blisterbeutel eingefüllt wurden.

Die Überprüfung durch einen Benutzer ist sehr zeitaufwendig und kostspielig. Daher wurden automatische Kontrollgeräte entwickelt, bei denen eine Vorprüfung maschinell erfolgt, und lediglich im Fall von nicht eindeutigen Ergebnissen der maschinellen Prüfung ein Benutzer einen Blisterbeutel prüfen muss. Ein entsprechendes Kontrollgerät ist beispielsweise in der WO 2005/017814 A1 beschrieben. Bei der in der vorgenannten Druckschrift offenbarten Vorrichtung wird mittels einer Kamera die Anzahl der in einem Blisterbeutel angeordneten Arzneimittelportionen ermittelt und mit der Anzahl verglichen, die gemäß einer Vorgabe in dem zu verifizierenden Blisterbeutel angeordnet sein soll. Mit dem in dieser Druckschrift offenbarten Kontrollgerät werden die Arzneimittelportionen aber lediglich hinsichtlich ihrer Anzahl überprüft. Falsche Arzneimittelportionen können nicht erkannt werden solange deren Anzahl mit der Vorgabe übereinstimmt.

Bei anderen bekannten Kontrollgeräten werden Kenngrößen der Arzneimittelportionen anhand eines Kamerabildes und unter Verwendung einer entsprechenden Software ermittelt. In der WO 2015/126254 A1 ist dies beispielsweise offenbart, allerdings im Zusammenhang mit Arzneimittelportionen vor der Verblisterung. Zum Identifizieren einzelner Arzneimittelportionen werden die anhand des Kamerabildes ermittelten Kenngrößen (oder Bilder bzw. Bildabschnitte) mit gespeicherten Sollgrößen (bzw. Bildern) verglichen. Aus den Druckschriften US 2017/0264867 A1, WO 02/25568 A2 und WO 2014/119994 A1 ist es ferner bekannt, Arzneimittelportionen nach dem Verblistern anhand von Kenndaten zu identifizieren, wobei auf gespeicherte Kenndaten zurückgegriffen wird.

Ein Nachteil der vorgenannten Kontrollgeräte ist es, dass jedes System vor Inbetriebnahme mit den Arzneimittelarten, die es verifizieren soll, angelernt werden muss, da die Kameras jedes Inspektorsystems leicht unterschiedlich in diesem angeordnet sind und aufgrund von Abweichungen in der Optik auch leicht unterschiedliche Abbilder erzeugen, die im jeweils unterschiedlichen Maße von den Erscheinungsformen der "echten" Arzneimittelportionen abweichen, d. h. Farben und Formen unterschiedlich erkennen. Nur mittels des Anlernens kann sichergestellt werden, dass trotz der vorgenannten Abweichungen das Kontrollgerät die Arzneimittelportionen korrekt verifizieren bzw. erkennen kann.

Es ist Aufgabe der vorliegenden Erfindung, ein Verfahren und ein System bereitzustellen, bei dem ein Anlernen einer Vorrichtung zum Verifizieren von Arzneimittelportionen vermieden werden kann.

Die Aufgabe wird erfindungsgemäß gelöst durch ein Verfahren zum Vermessen und Verifizieren von Arzneimittelportionen gemäß Patentanspruch 1. Erfindungsgemäß werden zunächst in einem Schritt a) mit einer kalibrierten Kamera einer Vermessungsvorrichtung charakteristische Kenndaten einer Arzneimittelart erstellt. Charakteristische Kenndaten einer Arzneimittelart sind beispielweise die Größe bzw. Form einer Arzneimittelportion, die Farbe der Arzneimittelportion oder deren Reflexionsmuster. Ferner ist es möglich, als charakteristische Kenndaten auch das 3D-Profil einer Arzneimittelportion einer Arzneimittelart zu erfassen, wobei dazu spezielle Kameras erforderlich sind. Ferner kann die Arzneimittelportion auf Beschädigungen untersucht werden, beispielsweise anhand des 3D-Profils.

Die charakteristischen Kenndaten werden erstellt, indem mit der kalibrierten Kamera zumindest ein digitales Abbild der Arzneimittelportion erzeugt wird und das erzeugte digitale Abbild einer Steuereinrichtung übergeben wird. Von der Steuereinrichtung werden dann anhand des digitalen Abbilds mittels eines aus dem Stand der Technik bekannten Bildverarbeitungsprogramms und unter Berücksichtigung der bekannten Kalibrierungsparameter KP(MESS) der Kamera die charakteristischen Kenndaten für die Arzneimittel erstellt.

Wie bereits eingangs erwähnt, erzeugt jede Kamera aufgrund geringfügiger Abweichungen in unter anderem der Kameraoptik sowie Abweichen hinsichtlich der Anordnung der Kamera zu dem abzubildenden Objekt von demselben Objekt unterschiedliche digitale Abbilder, so dass Bildverarbeitungsprogramme auf der Basis der unterschiedlichen digitalen Abbilder voneinander abweichende charakteristische Kenndaten erstellen würden. Erfindungsgemäß ist es daher wesentlich, dass zum Erstellen des digitalen Abbilds der Arzneimittelportionen eine kalibrierte Kamera verwendet wird, so dass mit der Vermessungsvorrichtung "normalisierte" charakteristische Kenndaten erstellt werden. Dabei ist es unerheblich, welche Kamera oder welches Verfahren zur Normalisierung der Kamera verwendet wird, solange die charakteristischen Kenndaten die wahren Kenndaten der Arzneimittelart wiedergeben, also u. a. deren korrekte Größe sowie Farbe. Da bei der Produktion der Arzneimittelportionen stets gewisse Abweichungen in Form, Größe und Farbe auftreten, werden üblicherweise mehrere Abbilder aufgenommen, aus denen mehrere Kenndaten ermittelt werden, aus denen dann ein Kenndatenbereich bestimmt wird. Im Zuge der Anmeldung wird dies jedoch nicht weiter explizit erwähnt, d. h. mit Kenndaten sind regelmäßig Kenndatenbereiche gemeint.

In einem Schritt b) werden die charakteristischen Kenndaten der Arzneimittelart von der Vermessungsvorrichtung in einer Speichervorrichtung abgelegt. Zumindest der vorgenannte Schritt a) wird dann so oft wiederholt, bis die charakteristischen Kenndaten aller gewünschten Arzneimittelarten erhalten wurden. Regelmäßig wird es erforderlich sein, bei neuen Produkten oder Änderungen an den Arzneimittelportionen entsprechend obiger Vorgabe neue Kenndaten zu ermitteln. Diese werden dann in der Speichervorrichtung abgelegt bzw. aktualisiert.

Damit die mittels der Vermessungsvorrichtung erstellten charakteristischen Kenndaten zu einer Verifikation von beispielsweise verblisterten Arzneimittelportionen genutzt werden können, ist es in einem Schritt c) vorgesehen, dass die charakteristischen Kenndaten von einer Verifikationsvorrichtung abgerufen oder an diese übertragen werden.

Die Übertragung an die bzw. von der Speichervorrichtung kann mit einem beliebigen, aus dem Stand der Technik bekannten Datenübertragungsverfahren durchgeführt werden. Beispielsweise kann die Speichervorrichtung über ein kabelloses oder kabelbasiertes Kommunikationsnetzwerk ggf. temporär mit der Steuereinrichtung der Vermessungsvorrichtung bzw. Verifikationsvorrichtung verbunden sein. Alternativ können für das "Übertragen" auch mobile Datenträger wie USB-Sticks oder Festplatten genutzt werden.

In einem Schritt d) werden mit einer kalibrierten Kamera der Verifikationsvorrichtung individuelle Kenndaten für eine zu verifizierende Arzneimittelportion erstellt und mit charakteristischen Kenndaten der Arzneimittelart verglichen, deren Vorhandensein zu verifizieren ist. Im Folgenden wird stets von "einer" Arzneimittelportion gesprochen. Ersichtlich ist aber, dass auch eine Zusammenstellung aus mehreren Arzneimittelportionen verifiziert werden kann, so dass im Folgenden stets auch der Plural "Arzneimittelportionen" umfasst sein soll.

Informationen darüber, welche Arzneimittelportion/-en welcher Arzneimittelart/-en zu verifizieren ist bzw. sind, sind der Vermessungsvorrichtung vorzugeben. Dies kann beispielsweise geschehen, indem mittels einer Datenerfassungseinrichtung auf einem Blisterbeutel aufgebrachte Daten erfasst werden, wobei die Daten Informationen zu den umfassten Arzneimittelarten enthalten, sprich die Sollzusammensetzung aufzeigen. Alternativ können der Verifikationsvorrichtung die Daten bereitgestellt werden, die auch dem Blisterautomaten zum Zusammenstellen der Arzneimittelportionen bereitgestellt wurden, so dass die Vermessungsvorrichtung jederzeit weiß, welche Arzneimittelportion/-en welcher Arzneimittelart/-en zu verifizieren ist bzw. sind.

Um einen Vergleich zwischen individuellen Kenndaten und charakteristischen Kenndaten anstellen zu können, wird mit einer kalibrierten Kamera der Verifikationsvorrichtung zumindest ein digitales Abbild einer zu verifizierenden Arzneimittelportion erzeugt, das erzeugte digitale Abbild der zu verifizierenden Arzneimittelportion einer Steuereinrichtung übergeben und von der Steuereinrichtung anhand bekannter Kalibrierungsparameter der Kamera, der Verifizierungsvorrichtung und des digitalen Abbildes individuelle Kenndaten für die zu verifizierende Arzneimittelportion bestimmt. Sofern eine Zusammenstellung von mehreren Arzneimittelportionen verifiziert werden soll, können die individuellen Kenndaten in Abhängigkeit von der verwendeten Kamera und Software anhand eines Abbildes aller Arzneimittelportionen oder mehrerer Abbilder (jeweils einer Arzneimittelportion) erzeugt werden. Die individuellen Kenndaten werden anschließend von einer Steuereinrichtung mit charakteristischen Kenndaten der entsprechenden Arzneimittelart/-en verglichen, und anhand der Vergleichsergebnisse wird die Arzneimittelportion verifiziert bzw. abgelehnt. Eine Arzneimittelportion wird dann verifiziert, wenn die charakteristischen mit den individuellen Kenndaten unter Berücksichtigung vorgegebener Fehlergrenzen übereinstimmen.

Aufgrund der Verwendung einer kalibrierten Kamera sowohl bei der Vermessungsvorrichtung als auch bei der Verifikationsvorrichtung und der Bereitstellung der erstellten charakteristischen Kenndaten an eine sowohl für die Vermessungsvorrichtung als auch die Verifikationsvorrichtung zugängliche Speichervorrichtung ist es möglich, die von einer zentralen Vermessungsvorrichtung angefertigten charakteristischen Kenndaten einer Vielzahl von Verifikationsvorrichtungen bereitzustellen, ohne dass die Notwendigkeit besteht, dass die Verifikationsvorrichtungen für sämtliche Arzneimittelarten, die sie verifizieren sollen, zunächst angelernt werden müssen. Der zeitaufwendige, kostenintensive und fehleranfällige Vorgang des "Teachens" einer Verifikationsvorrichtung entfällt, indem auf bereits vorhandene charakteristische Kenndaten zugegriffen wird, wobei dies, wie oben dargelegt ist, voraussetzt, dass sowohl das Erstellen der charakteristischen Kenndaten der Arzneimittelarten als auch das Erstellen der individuellen Kenndaten der Arzneimittelportionen mit kalibrierten Kameras durchgeführt wird.

Die vorgenannte Speichervorrichtung kann beispielsweise Teil eines firmeninternen Netzes sein, so dass die charakteristischen Kenndaten an sämtliche an das Firmennetz angeschlossene Verifikationsvorrichtungen mit dem Fachmann bekannten Verfahren übertragen werden können. Bei einer bevorzugten Ausführungsform ist es jedoch vorgesehen, dass die charakteristischen Kenndaten über ein Netzwerk in einer Speichervorrichtung abgelegt werden, wobei die Speichervorrichtung als Cloud-Speicher im Internet ausgebildet ist. Indem ein Cloud-Speicher als Ablageort für charakteristische Kenndaten gewählt ist, können diese jederzeit und weltweit sämtlichen Nutzern von Verifikationsvorrichtungen zugänglich gemacht werden, sofern die Verifikationsvorrichtungen entsprechend kalibrierte Kameras zum Erfassen eines digitalen Abbilds der zu verifizierenden Arzneimittelportion/-en umfassen.

Um zu gewährleisten, dass die charakteristischen Kenndaten nur an solche Verifikationsvorrichtungen übermittelt werden bzw. von diesen heruntergeladen werden können, die kompatibel ausgebildet sind (d. h. eine kalibrierte Kamera aufweisen), ist es bei einer bevorzugten Ausführungsform vorgesehen, dass die Verifikationsvorrichtung der Speichervorrichtung einen Authentifizierungscode übermittelt, die Speichervorrichtung diesen prüft und nur bei Gültigkeit des Authentifizierungscodes die charakteristischen Kenndaten von der Verifikationsvorrichtung abgerufen oder an diese übertragen werden können.

Aufgrund sich ändernder Herstellungsverfahren kommt es regelmäßig vor, dass sich beispielsweise die Form der Arzneimittelportionen einer Arzneimittelart ändert. Um jederzeit Gewissheit darüber zu haben, zu welchem Zeitpunkt die charakteristischen Kenndaten zu einer Arzneimittelart erstellt wurden, ist es bei einer bevorzugten Ausführungsform vorgesehen, dass bei dem Erstellen der charakteristischen Kenndaten diese mit einem Zeitstempel versehen werden, der das Datum des Erstellens der charakteristischen Kenndaten wiedergibt. Sofern die charakteristischen Kenndaten einen Zeitstempel umfassen, ist es besonders bevorzugt, dass die Verifikationsvorrichtung vor dem Abgleich der charakteristischen Kenndaten mit den individuellen Kenndaten der zu verifizierenden Arzneimittelportion den Zeitstempel der den individuellen Kenndaten zugeordneten charakteristischen Kenndaten prüft und bei Überschreiten einer vorgegebenen Zeitdifferenz t1 die charakteristischen Kenndaten bei der Speichervorrichtung abruft und intern aktualisiert. Auf diese Weise kann vermieden werden, dass zu alte charakteristische Kenndaten für den Abgleich verwendet werden.

Wie oben bereits angedeutet, kann es vorkommen, dass nicht eine einzelne Arzneimittelportion zu verifizieren ist, sondern eine Zusammenstellung von Arzneimittelportionen, die gegebenenfalls Arzneimittelportionen unterschiedlicher Arzneimittelarten umfassen kann. So ist es beispielsweise denkbar, dass in einem Blisterbeutel, dessen Inhalt zu verifizieren ist, drei oder mehr Arzneimittelportionen unterschiedlicher Arzneimittelarten vorhanden sind. Erfindungsgemäß findet eine Verifikation statt, indem individuelle Kenndaten von in beispielsweise einem Blisterbeutel angeordneten Arzneimittelportionen mittels eines Bildverarbeitungsprogramms und den Kalibrierungsparametern erstellt werden und mit den charakteristischen Kenndaten der Arzneimittelarten verglichen werden, die sich in dem Blisterbeutel befinden sollen. Aufgrund der Eigenschaft der charakteristischen Kenndaten, die lediglich das äußere Erscheinungsbild einer Arzneimittelportion charakterisieren, kann es nicht ausgeschlossen werden, dass Arzneimittelportionen unterschiedlicher Arzneimittelarten identische charakteristische Kenndaten aufweisen. Um zu vermeiden, dass bei der Verifikation von mehreren Arzneimittelportionen einer Zusammenstellung fehlerhafte positive Verifikationen vorgenommen werden, ist es bei einer bevorzugten Ausführungsform des erfindungsgemäßen Verfahrens vorgesehen, dass bei dem Verifizieren einer Zusammenstellung von mehreren Arzneimittelportionen die Steuereinrichtung der Verifikationsvorrichtung die den zu verifizierenden Arzneimittelportionen zugeordneten charakteristischen Kenndaten dahingehend überprüft, ob sämtliche Arzneimittelportionen der Zusammenstellung eindeutig verifizierbar sind, das heißt überprüft wird, ob gegebenenfalls identische charakteristische Kenndaten vorliegen, wobei in einem solchen Fall eine eindeutige Verifizierbarkeit nicht gegeben ist.

Wie bereits dargelegt, ist es für das erfindungsgemäße Verfahren wesentlich, dass die Kameras der Vermessungsvorrichtung und der Verifikationsvorrichtung kalibriert sind, und zwar vorzugsweise mittels desselben Kalibrierungsverfahrens. Für eine Kalibrierung sind sowohl sogenannte "innere" Kameraparameter, welche die Objektiv- bzw. Linseneigenschaften der Kamera sowie die relative Anordnung von Objektiv und Bildsensor, bspw. CCD- oder CMOS-Sensor, betreffen, als auch sogenannte "äußere" Kameraparameter zu bestimmen, welche die geometrische Lage, Position und Orientierung der Kamera im Raum sowie die Beleuchtung betreffen. Aus den vorgenannten Parametern ergeben sich die Kalibrierungsparameter. Für die Kalibrierung einer Kamera sind eine Vielzahl verschiedener Kalibrierverfahren beschrieben. Einen Überblick hierüber gibt der Aufsatz R. Gerdes et al., "Kalibrierung eines digitalen Bildverarbeitungssystems mit CCD-Kamera", tm - Technisches Messen 60 (1993) 6 und 60 (1993) 7/8, R. Oldenbourg Verlag, wo klassische Ansätze für Kalibrierverfahren beschrieben werden.

Vorzugsweise werden die Kalibrierungsparameter KP(MESS), KP(VERI) der Kameras der Vermessungs- und Verifikationsvorrichtung erzeugt, indem mit den Kameras digitale Abbilder einer Mehrzahl von Kalibrierungsobjekten erzeugt werden und diese zum Erzeugen der Kalibrierungsparameter KP(MESS), KP(VERI) mit Kenndaten zu den Kalibrierungsobjekten verglichen werden.

Die vorgenannte Aufgabe wird ferner gelöst durch ein System zum Vermessen und Verifizieren von Arzneimittelportionen gemäß Patentanspruch 8. Das erfindungsgemäße System umfasst eine Vermessungsvorrichtung, umfassend Mittel zum Erstellen von charakteristischen Kenndaten einer Arzneimittelart durch Ausführen des Schrittes a) gemäß dem vorgenannten Verfahren, eine Speichervorrichtung, umfassend Mittel zum Speichern der charakteristischen Kenndaten durch Ausführen des Schrittes b) des vorgenannten Verfahrens, und eine Verifikationsvorrichtung, umfassend Mittel zum Erstellen von individuellen Kenndaten für eine zu verifizierende Arzneimittelportion und zum Vergleichen der individuellen Kenndaten mit charakteristischen Kenndaten durch Ausführen der Schritte c) und d) gemäß dem erfindungsgemäßen Verfahren.

Die Erfindung betrifft ferner ein Computerprogrammprodukt, umfassend Befehle, die die Vermessungsvorrichtung des Systems veranlassen, durch Ausführen der Schritte a) und b) gemäß dem erfindungsgemäßen Verfahren charakteristische Kenndaten für eine Arzneimittelart zu erstellen und in einer Speichervorrichtung abzulegen, und umfassend Befehle, die die Verifikationsvorrichtung des Systems veranlassen, durch Ausführen der Schritte c) und d) gemäß dem erfindungsgemäßen Verfahren individuelle Kenndaten für zu verifizierende Arzneimittelportionen zu erstellen und mit charakteristischen Kenndaten zu vergleichen.

Im Nachfolgenden wird die vorliegende Erfindung anhand bevorzugter Ausführungsformen unter Bezugnahme auf die Zeichnung beschrieben, in welcher
Figur 1 einen Ablaufplan einer bevorzugten Ausführungsform des erfindungsgemäßen Verfahrens wiedergibt;
Figur 2 schematisch das Erzeugen der charakteristischen Kenndaten und den Abgleich mit individuellen Kenndaten veranschaulicht;
Figur 3 eine schematische Darstellung einer Ausführungsform des erfindungsgemäßen Systems zeigt;
Figur 4 einen Blisterschlauch mit einer Mehrzahl von Blisterbeuteln zeigt;
Figur 5 den Abgleich und die Verifikation von individuellen Kenndaten und charakteristischen Kenndaten veranschaulicht;
Figur 6 den Kalibrierungsvorgang schematisch darstellt; und
Figur 7 schematisch das Erzeugen eines Kalibrierungsparameters veranschaulicht.

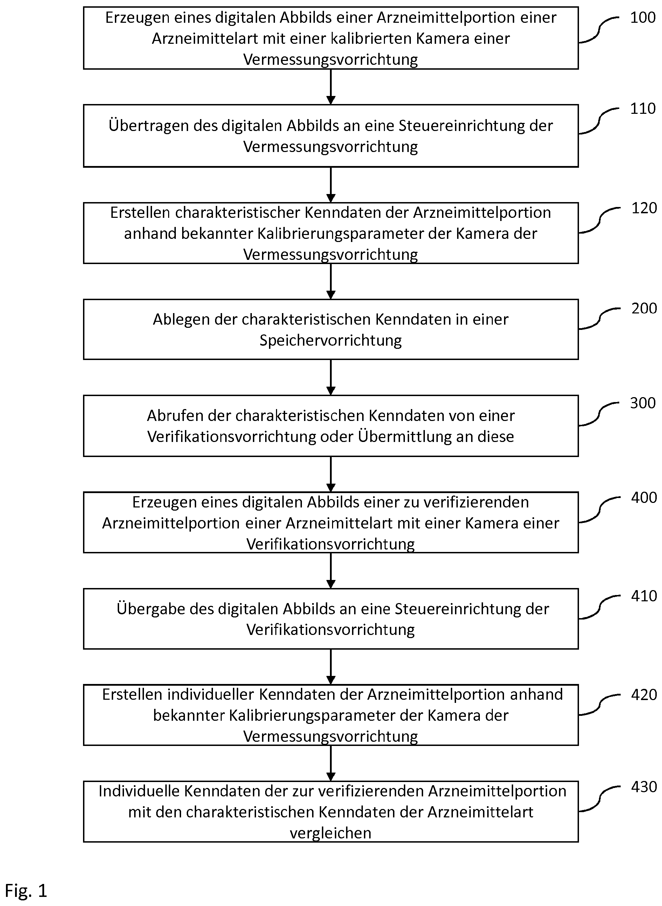

Figur 1 zeigt einen Ablaufplan einer bevorzugten Ausführungsform des erfindungsgemäßen Verfahrens zum Vermessen und Verifizieren von Arzneimittelportionen. In einem ersten Schritt 100 wird mit einer kalibrierten Kamera einer Vermessungsvorrichtung ein digitales Abbild einer Arzneimittelportion einer Arzneimittelart erstellt. Wie bereits zuvor erwähnt, verhält es sich in der Praxis regelmäßig so, dass eine Mehrzahl von Abbildern erzeugt wird, die den nachfolgenden Verfahrensschritten unterzogen werden, so dass nicht punktuelle charakteristische Kenndaten, sondern Bereiche erstellt werden. Dies wird nachfolgend vorausgesetzt, jedoch nicht weiter explizit beschrieben. Das digitale Abbild wird in einem Schritt 110 an eine Steuereinrichtung der Vermessungsvorrichtung übertragen. Bei der Steuereinrichtung kann es sich um einen integralen Bestandteil der vorgenannten Kamera handeln, sie kann jedoch beispielsweise auch als üblicher PC ausgebildet sein, der von einem Benutzer über einen Bildschirm gesteuert werden kann. Das Übertragen kann drahtlos oder drahtgebunden gemäß dem Fachmann bekannten Übertragungsverfahren stattfinden. In einem Schritt 120 werden anhand des digitalen Abbildes und unter Berücksichtigung von bekannten Kalibrierungsparametern der Kamera der Vermessungsvorrichtung charakteristische Kenndaten der Arzneimittelportion einer Arzneimittelart erstellt, wobei diese Kenndaten beispielsweise Größe, Form, Farbe der Arzneimittelportion umfassen können. Gemäß den vorgenannten Verfahrensschritten 100 - 120 werden charakteristische Kenndaten für sämtliche Arzneimittelarten erstellt, die später zu verifizieren sind.

In einem Schritt 200 werden die charakteristischen Kenndaten in einer Speichervorrichtung abgelegt, wobei dies jederzeit geschehen kann, d. h. die charakteristischen Kenndaten sofort nach Erstellen abgelegt werden können oder erst dann, wenn sämtliche später zu verifizierenden Arzneimittelarten bearbeitet wurden. Die Art der Speichervorrichtung ist für die vorliegende Erfindung nicht wesentlich. Die Übertragung der charakteristischen Kenndaten kann drahtgebunden oder drahtlos erfolgen, es ist auch denkbar, die charakteristischen Daten auf einen mobilen Datenträger, wie beispielsweise einen USB-Stick oder eine Festplatte, zu übertragen. Vorzugsweise ist die Speichervorrichtung als ein Cloud-Speicher ausgebildet, der jederzeit weltweit zu erreichen ist, so dass die charakteristischen Kenndaten einem Dritten jederzeit überall zur Verfügung stehen.

In einem Schritt 300 werden die charakteristischen Kenndaten von einer Verifikationsvorrichtung abgerufen oder an diese übermittelt. Auch dieses Abrufen bzw. Übermitteln kann kabellos oder kabelgebunden erfolgen. Auch hier ist es denkbar, dass die Speichervorrichtung für einen Datentransfer (temporär) an die Verifikationsvorrichtung angeschlossen wird.

Die nachfolgenden Verfahrensschritte der bevorzugten Ausführungsform des erfindungsgemäßen Verfahrens werden bezogen auf eine einzelne Arzneimittelportion beschrieben, gelten entsprechend aber auch für eine Zusammenstellung von mehreren Arzneimittelportionen. In einem Schritt 400 wird von einer zu verifizierenden Arzneimittelportion einer Arzneimittelart mit einer kalibrierten Kamera einer Verifikationsvorrichtung ein digitales Abbild erzeugt. In einem Schritt 410 wird das digitale Abbild einer Steuereinrichtung der Verifikationsvorrichtung übergeben, wobei das in Bezug auf Schritt 110 Dargelegte entsprechend gilt. In einem Schritt 420 werden unter Zuhilfenahme einer entsprechend ausgebildeten Bildverarbeitungssoftware und anhand der bekannten Kalibrierungsparameter der Kamera der Verifikationsvorrichtung individuelle Kenndaten der zu verifizierenden Arzneimittelportion erstellt. In einem Schritt 430 werden die zuvor erstellten individuellen Kenndaten der zu verifizierenden Arzneimittelportion mit den charakteristischen Kenndaten derjenigen Arzneimittelart verglichen, die die Verifikationsvorrichtung in beispielsweise einem Blisterbeutel "erwartet" - also die Arzneimittelart die von dem Blisterautomaten gemäß Vorgabe hätte verblistert werden sollen.

Wenn die Abweichungen zwischen den individuellen Kenndaten und den charakteristischen Kenndaten bestimmte vorgegebene Grenzwerte nicht überschreiten, wird die Arzneimittelportion positiv verifiziert, d. h. es wird bestätigt, dass die Arzneimittelportion eine Arzneimittelportion derjenigen Arzneimittelart ist, die von der Verifikationsvorrichtung erwartet wurde.

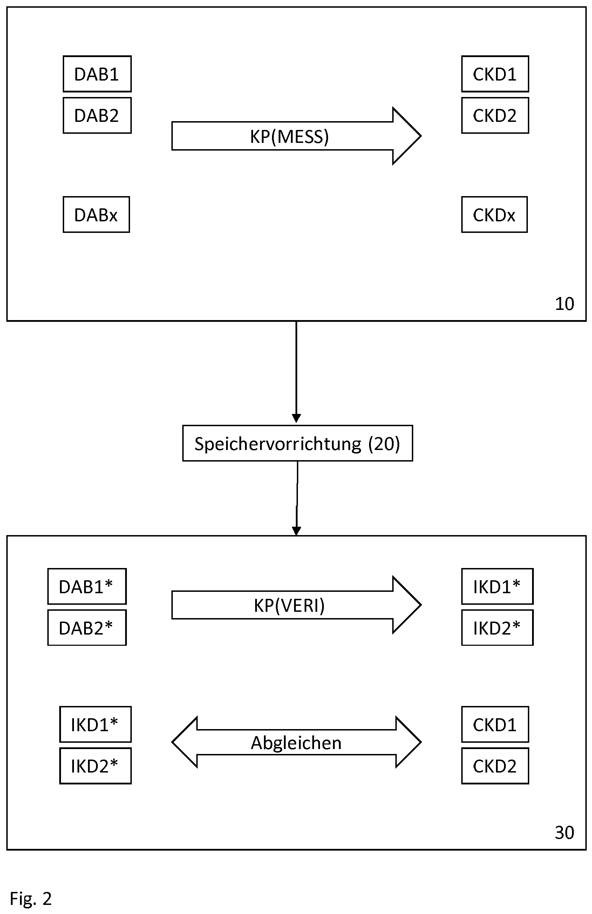

Figur 2 zeigt schematisch, wie charakteristische Kenndaten zu einer Arzneimittelart erstellt, an eine Speichervorrichtung übertragen und mit individuellen Kenndaten verglichen werden. Die digitalen Abbilder DAB1 - DABx werden mit Hilfe einer Bildverarbeitungssoftware analysiert und anhand der Kalibrierungsparameter KP(MESS) der Kamera einer Vermessungsvorrichtung 10 werden die charakteristischen Kenndaten CKD1 - CKDx erstellt. Wie bereits weiter oben angedeutet, handelt es sich bei den charakteristischen Kenndaten regelmäßig um eine Mehrzahl von Wertebereichen, die Fertigungstoleranzen bei der Herstellung der Arzneimittelportionen der verschiedenen Arzneimittelarten wiederspiegeln. Die charakteristischen Kenndaten CKD1 - CKDx werden an eine Speichervorrichtung 20 übertragen, und von dieser an eine Verifikationsvorrichtung 30 übermittelt.

Die Verifikationsvorrichtung erstellt mit Hilfe einer kalibrierten Kamera digitale Abbilder DAB1* und DAB2* von zu verifizierenden Arzneimittelportionen. Mittels einer Bildbearbeitungssoftware und unter Verwendung von einem Fachmann bekannten Verfahren werden unter Berücksichtigung der Kalibrierungsparameter KP(VERI) der Kamera der Verifikationsvorrichtung individuelle Kenndaten IKD1* und IKD2* für die zu verifizierenden Arzneimittelportionen erstellt. Diese individuellen Kenndaten IKD1* und IKD2* werden mit den charakteristischen Kenndaten CKD1 und CKD2 der Arzneimittelarten verglichen, die von der Steuereinrichtung der Verifikationsvorrichtung erwartet werden. Welche Arzneimittelarten bzw. Arzneimittelportionen der Arzneimittelarten erwartet werden, wird der Verifikationsvorrichtung zuvor mitgeteilt, beispielsweise indem diese Informationen von einem zu untersuchenden Blisterbeutel gelesen werden. Anhand des Vergleiches der individuellen Kenndaten mit den charakteristischen Kenndaten wird dann unter Berücksichtigung spezieller Vorgaben entschieden, ob die Arzneimittelportionen den Arzneimittelportionen entsprechen, die erwartet wurden.

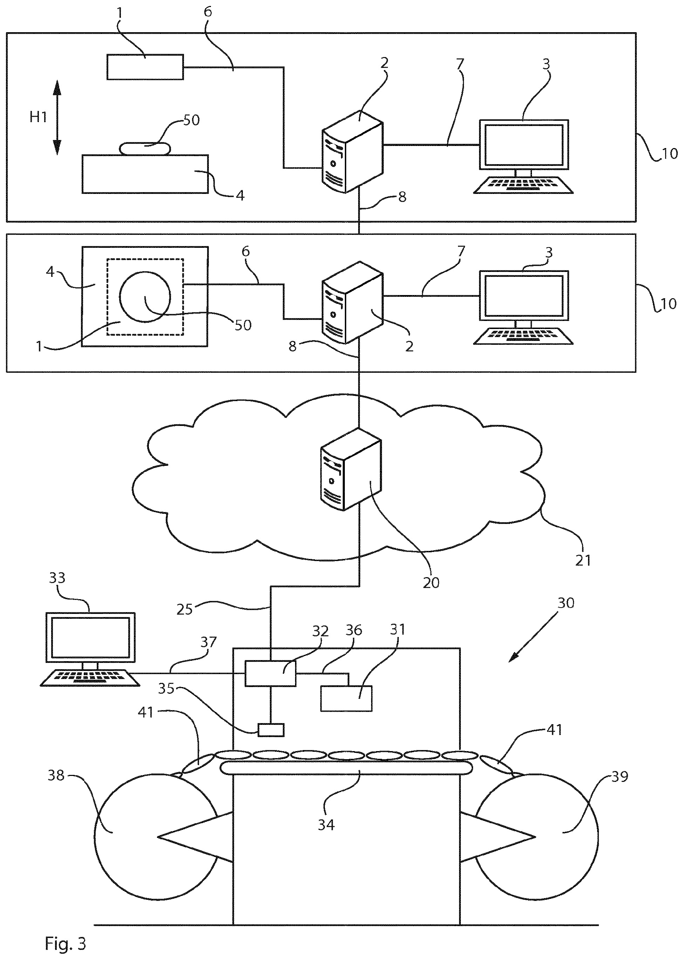

Figur 3 zeigt eine schematische Darstellung eines Systems zum Vermessen und Verifizieren von Arzneimittelportionen. In dem oberen Abschnitt sind zwei Ansichten der Vermessungsvorrichtung 10 gezeigt, im oberen Abschnitt eine Seitenansicht, im unteren Abschnitt eine Draufsicht, wobei lediglich die "linken" Abschnitte mit der Kamera variieren. Die Vermessungsvorrichtung umfasst eine Kamera 1, die über eine Leitung 6 mit einer Steuereinrichtung 2 gekoppelt ist, die wiederum über eine Leitung 7 mit einer Anzeigeeinrichtung 3 gekoppelt ist. Unterhalb der Kamera 1 ist auf einem Ablagetisch 4 eine zu vermessende Arzneimittelportion 50 einer Arzneimittelart angeordnet. Die Kamera 1 hat einen vorgegebenen Abstand H1 von der Oberfläche des Ablagetisches, wobei dieser Abstand genau dem Abstand entspricht, den die Kamera zu dem Ablagetisch bei der Kalibrierung der Kamera hatte (sogenannter äußerer Kalibrierungsparameter). Die Steuereinrichtung 2 ist in der gezeigten Ausführungsform über eine Kommunikationsverbindung 8 mit einer Speichervorrichtung 20 verbunden, die in der gezeigten Ausführungsform als Cloud-Speicher ausgebildet ist, der Teil des schematisch angedeuteten Internets 21 ist. Dem Fachmann sind die für die Übertragung notwendigen kabelgebundenen und kabellosen Übertragungsverfahren über das Internet bekannt, so dass auf eine detaillierte Beschreibung verzichtet wird.

Die Speichervorrichtung 20 ist über eine (temporäre) Kommunikationsverbindung 25 mit einer Steuereinrichtung 32 der Verifikationsvorrichtung 30 verbunden. Die Steuereinrichtung 32 ist über eine Leitung 37 mit einer Anzeigeeinrichtung 33 und eine Leitung 36 mit einer Kamera 31 verbunden. Darüber hinaus ist die Steuereinrichtung 32 mit einer Erfassungseinrichtung 35 gekoppelt. Bei der gezeigten Ausführungsform ist die Kamera 31 oberhalb eines aus mehreren Blisterbeuteln bestehenden Blisterschlauchs angeordnet. Der Blisterschlauch ist auf einer Rolle 38 aufgerollt und wird zum Verifizieren der Arzneimittelportionen in den einzelnen Blisterbeuteln nach "rechts" auf die Rolle 39 bewegt. Dazu ist die Rolle 39 mit einem (nicht gezeigten) Motor angetrieben. Mit der Kamera 31 wird ein digitales Abbild der Arzneimittelportion/-en in einem Blisterbeutel erzeugt und über die Leitung 36 an die Steuereinrichtung 32 übertragen. Mittels der Erfassungseinrichtung 35 werden auf den Blisterbeuteln 41 aufgedruckte Daten ausgelesen, die u. a. angeben, welche Arzneimittelportion/-en in den einzelnen Blisterbeuteln angeordnet sein soll/-en.

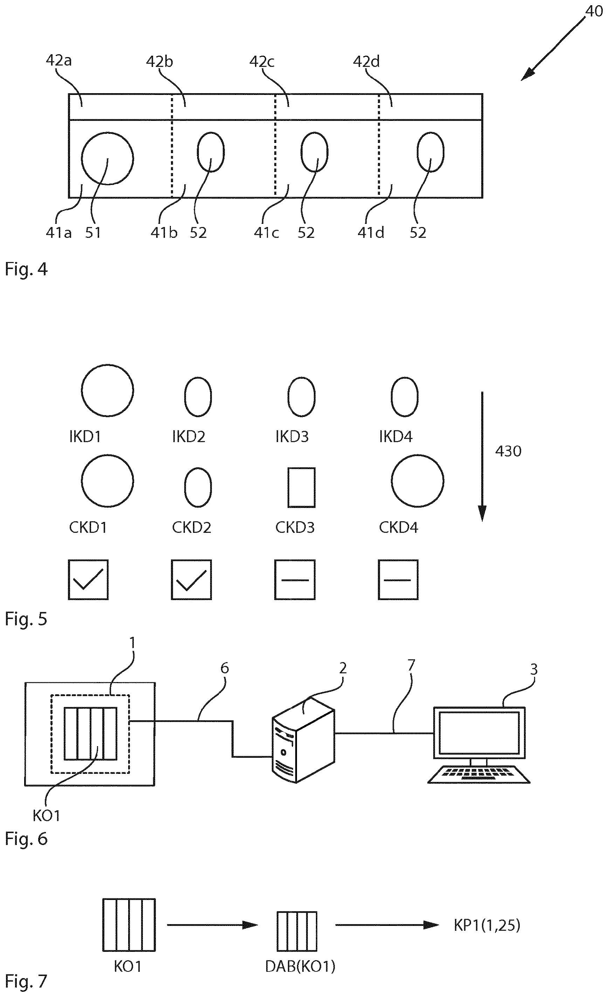

Figur 4 zeigt eine schematische Darstellung eines Blisterschlauchs 40 mit vier Blisterbeuteln 41a - 41d sowie in diesen angeordneten Arzneimittelportionen 51, 52. Im oberen Abschnitt umfasst jeder Blisterbeutel einen Datenabschnitt 42a - 42d, auf welchen (nicht dargestellte) Informationen über die Arzneimittelportionen bzw. -arten aufgedruckt sind, die in dem Blisterbeutel angeordnet sein sollen.

Figur 5 veranschaulicht schematisch die Verifikation von Arzneimittelportionen. In der oberen Reihe sind individuelle Kenndaten IKD1 - IKD4 betreffend die Form der Arzneimittelportionen wiedergegeben, und zwar indem die Form der in den Blisterbeuteln befindlichen Arzneimittelportionen bildlich wiedergegeben ist. In der Zeile darunter sind die charakteristischen Kenndaten CKD1 - CKD4 zur Form derjenigen Arzneimittelportionen bzw. -arten wiedergegeben, die von der Verifikationsvorrichtung in den Blisterbeuteln erwartet werden. In der unteren Zeile gemäß Figur 5 ist das Ergebnis der Verifikation veranschaulicht. Die individuellen Kenndaten IKD1 und IKD2 sind positiv verifiziert, IKD3 und IKD4 negativ.

Figur 6 veranschaulicht grob schematisch, wie die Kamera 1 der Vermessungsvorrichtung kalibriert wird, wobei entsprechendes auch für die Kamera einer Verifikationsvorrichtung gilt. Bei der Kalibrierung werden eine Mehrzahl von Kalibrierungsobjekten, von denen lediglich ein Kalibrierungsobjekt KO1 dargestellt ist, unter die Kamera gelegt, und es wird ein digitales Abbild der Kalibrierungsobjekte erzeugt. Mit Hilfe einer Bildverarbeitungssoftware werden charakteristische Kenngrößen für das vermessene Kalibrierungsobjekt erstellt und anhand dieser charakteristischen Kenngrößen kann ermittelt werden, ob und in welchem Maße das von der Kamera erzeugte Abbild von dem tatsächlichen Erscheinungsbild des Kalibrierungsobjektes KO1 abweicht.

In Figur 7 ist dies schematisch für die charakteristische Kenngröße "Größe" dargelegt, wobei diese Darstellung sehr vereinfacht ist und lediglich das Prinzip darstellen soll. In der Mitte von Figur 7 sind die Ergebnisse der Bildverarbeitung zu Kalibrierungsobjekt KO1 in Bezug auf die Kenngröße "Größe" optisch wiedergegeben. Anhand der Größenunterschiede ist ersichtlich, dass die Größe des Objektes gemäß dem digitalen Objekt nicht der "wahren" Größe des Kalibrierungsobjektes KO1 entspricht. Im dargestellten Fall beträgt die Größe des Objektes gemäß der digitalen Abbildung lediglich 75 %, wobei eine solche Abweichung in der Realität nicht auftritt. Aufgrund der Abweichung ergibt sich für Kamera 1 in Bezug auf die charakteristische Kenngröße "Größe" ein Kalibrierungsfaktor von 1,25, d. h. die mit der Bildverarbeitungssoftware ermittelten Kenngrößen müssen mit diesem Kalibrierungsparameter umgerechnet werden, um den "wahren" charakteristischen Kennwert "Größe" zu erhalten.

## Patentansprüche

1. Verfahren zum Vermessen und Verifizieren von Arzneimittelportionen, wobei
a) mit einer kalibrierten Kamera (1) einer Vermessungsvorrichtung (10) charakteristische Kenndaten einer Arzneimittelart erstellt werden, indem:
mit der kalibrierten Kamera (1) der Vermessungsvorrichtung (10) zumindest ein digitales Abbild einer Arzneimittelportion (50) einer Arzneimittelart erzeugt wird,
das erzeugte digitale Abbild einer Steuereinrichtung (2) übergeben wird,
von der Steuereinrichtung (2) anhand bekannter Kalibrierungsparameter KP(MESS) der Kamera (1) der Vermessungsvorrichtung (10) und des digitalen Abbilds charakteristische Kenndaten für die Arzneimittelart erstellt werden,
b) die charakteristischen Kenndaten der Arzneimittelart in einer Speichervorrichtung (20) abgelegt werden,
c) charakteristischen Kenndaten von einer Verifikationsvorrichtung (30) abgerufen oder an diese übertragen werden,
d) mit einer kalibrierten Kamera (31) der Verifikationsvorrichtung (30) individuelle Kenndaten für eine zu verifizierende Arzneimittelportion erstellt und mit charakteristischen Kenndaten verglichen werden, indem:
mit einer kalibrierten Kamera (31) der Verifikationsvorrichtung (30) zumindest ein digitales Abbild einer zu verifizierenden Arzneimittelportion erzeugt wird,
das erzeugte digitale Abbild der zu verifizierenden Arzneimittelportion einer Steuereinrichtung (32) übergeben wird,
von der Steuereinrichtung (32) anhand bekannter Kalibrierungsparameter KP(VERI) der Kamera (31) der Verifikationsvorrichtung (30) und des digitalen Abbilds individuelle Kenndaten für die zu verifizierende Arzneimittelportion bestimmt werden, und
von der Steuereinrichtung (32) die individuellen Kenndaten mit charakteristischen Kenndaten der entsprechenden Arzneimittelart verglichen werden und anhand von Ergebnissen des Vergleichs die Arzneimittelportion verifiziert oder abgelehnt wird.

2. Verfahren zum Vermessen und Verifizieren von Arzneimittelportionen nach Anspruch 1, **dadurch gekennzeichnet, dass** die charakteristischen Kenndaten über eine Kommunikationsverbindung (8) in einer Speichervorrichtung (20) abgelegt werden, die als Cloud-Speicher im Internet (21) ausgebildet ist.

3. Verfahren zum Vermessen und Verifizieren von Arzneimittelportionen nach Anspruch 1 oder 2, **dadurch gekennzeichnet, dass** die Verifikationsvorrichtung (30) der Speichervorrichtung (20) einen Authentifizierungscode übermittelt, die Speichervorrichtung (20) diesen prüft und nur bei Gültigkeit die charakteristischen Kenndaten von der Verifikationsvorrichtung (30) abgerufen oder an diese übertragen werden.

4. Verfahren zum Vermessen und Verifizieren von Arzneimittelportionen nach einem der Ansprüche 1 - 3, **dadurch gekennzeichnet, dass** bei dem Erstellen der charakteristischen Kenndaten diese einen Zeitstempel erhalten.

5. Verfahren zum Vermessen und Verifizieren von Arzneimittelportionen nach Anspruch 4, **dadurch gekennzeichnet, dass** die Verifikationsvorrichtung (30) vor dem Abgleich der charakteristischen Kenndaten mit den individuellen Kenndaten der zu verifizierenden Arzneimittelportion den Zeitstempel der den individuellen Kenndaten zugeordneten charakteristischen Kenndaten prüft und bei Überschreiten einer vorgegebenen Zeitdifferenz t1 die charakteristischen Kenndaten bei der Speichervorrichtung (20) abruft und aktualisiert.

6. Verfahren zum Vermessen und Verifizieren von Arzneimittelportionen nach einem der Ansprüche 1 - 5, **dadurch gekennzeichnet, dass** bei dem Verifizieren einer Zusammenstellung von mehreren Arzneimittelportionen die Steuereinrichtung (32) der Verifikationsvorrichtung (30) die den zu verifizierenden Arzneimittelportionen zugeordneten charakteristischen Kenndaten dahingehend überprüft, ob sämtliche Arzneimittelportionen der Zusammenstellung eindeutig verifizierbar sind.

7. Verfahren zum Vermessen und Verifizieren von Arzneimittelportionen nach einem der Ansprüche 1 - 6, **dadurch gekennzeichnet, dass** die Kalibrierungsparameter KP(MESS), KP(VERI) der Kameras (1; 31) der Vermessungs- und Verifikationsvorrichtung (10; 30) erzeugt werden, indem mit den Kameras digitale Abbilder einer Mehrzahl von Kalibrierungsobjekten KO erzeugt werden und diese zum Erzeugen der Kalibrierungsparameter mit Kenndaten zu den Kalibrierungsobjekten verglichen werden.

8. Ein System zum Vermessen und Verifizieren von Arzneimittelportionen, umfassend
eine Vermessungsvorrichtung, umfassend Mittel zum Erstellen von charakteristischen Kenndaten einer Arzneimittelart durch Ausführen des Schrittes a) gemäß einem der Ansprüche 1 - 7,
eine Speichervorrichtung (20), umfassend Mittel zum Speichern der charakteristischen Kenndaten durch Ausführen des Schritts b) gemäß einem der Ansprüche 1 - 7, und
eine Verifikationsvorrichtung (30), umfassend Mittel zum Erstellen von individuellen Kenndaten einer zu verifizierenden Arzneimittelportion und zum Vergleichen der individuellen Kenndaten mit charakteristischen Kenndaten durch Ausführen der Schritte c) und d) gemäß einem der Ansprüche 1 - 7.

9. Computerprogrammprodukt, umfassend Befehle, die die Vermessungsvorrichtung (10) des Systems nach Anspruch 8 veranlassen, durch Ausführen der Schritte a) und b) gemäß einem der Ansprüche 1 - 7 charakteristische Kenndaten einer Arzneimittelart zu erstellen und in einer Speichervorrichtung (20) abzulegen, und umfassend Befehle, die die Verifikationsvorrichtung (30) des Systems nach Anspruch 8 veranlassen, durch Ausführen der Schritte c) und d) gemäß einem der Ansprüche 1 - 7 individuelle Kenndaten für eine zu verifizierende Arzneimittelportion zu erstellen und mit charakteristischen Kenndaten zu vergleichen.

## Claims

1. Method for measuring and verifying drug portions, wherein
a) characteristic key data of a drug type are compiled with a calibrated camera (1) of a measuring device (10) in that:
at least one digital image of a drug portion (50) of a drug type is generated with the calibrated camera (1) of the measuring device (10),
the generated digital image is transferred to a control unit (2),
characteristic key data for the drug type are compiled by the control unit (2) using known calibration parameters KP(MESS) of the camera (1) of the measuring device (10) and of the digital image;
b) the characteristic key data of the drug type are stored in a storage device (20),
c) characteristic key data are retrieved from or transmitted to a verification device (30),
d) individual key data for a drug portion to be verified are compiled using a calibrated camera (31) of the verification device (30) and compared with characteristic key data, in that:
at least one digital image of a drug portion to be verified is generated with a calibrated camera (31) of the verification device (30),
the generated digital image of the drug portion to be verified is transferred to a control unit (32),
individual key data for the drug portion to be verified are determined by the control unit (32) on the basis of known calibration parameters KP(VERI) of the camera (31) of the verification device (30) and the digital image, and
the control unit (32) compares the individual key data with characteristic key data of the corresponding drug type and, based on the results of the comparison, verifies or rejects the drug portion.

2. Method for measuring and verifying drug portions according to claim 1, **characterized in that** the characteristic key data are stored via a communication link (8) in a storage device (20) which is designed as a cloud storage on the internet (21).

3. Method for measuring and verifying drug portions according to claim 1 or 2, **characterized in that** the verification device (30) of the storage device (20) transmits an authentication code, the storage device (20) verifies said authentication code, and the characteristic key data are retrieved by or transmitted to the verification device (30) only if said authentication code is valid.

4. Method for measuring and verifying drug portions according to one of the claims 1-3, **characterized in that**, during their compilation, the characteristic key data receive a time stamp.

5. Method for measuring and verifying drug portions according to claim 4, **characterized in that**, prior to the comparison of the characteristic key data with the individual key data of the drug portion to be verified, the verification device (30) verifies the time stamp of the characteristic key data associated with the individual key data, and retrieves from the storage device (20) and updates the characteristic key data, when a predetermined time difference t1 is exceeded.

6. Method for measuring and verifying drug portions according to one of the claims 1-5, **characterized in that**, during the verification of a compilation of multiple drug portions, the control unit (32) of the verification device (30) verifies the characteristic key data associated with the drug portions to be verified as to whether all drug portions of the compilation are clearly verifiable.

7. Method for measuring and verifying drug portions according to one of the claims 1-6, **characterized in that** the calibration parameters KP(MESS), KP(VERI) of the cameras (1; 31) of the measuring and verification device (10; 30) are generated **in that** digital images of a multiplicity of calibration objects KO are generated with the cameras and compared with key data for the calibration objects in order to generate the calibration parameters.

8. System for measuring and verifying drug portions, comprising
a measuring device, comprising means for compiling characteristic key data of a drug type by performing step a) according to one of the claims 1-7,
a storage device (20), comprising means for storing the characteristic key data by performing step b) according to one of the claims 1-7, and
a verification device (30), comprising means for compiling individual key data of a drug portion to be verified and for comparing the individual key data with characteristic key data by performing steps c) and d) according to one of the claims 1-7.

9. Computer program product, comprising commands for prompting the measuring device (10) of the system according to claim 8 to compile characteristic key data of a drug type by performing steps a) and b) according to one of the claims 1-7, and to store said characteristic key data in a storage device (20) and comprising commands for prompting the verification device (30) of the system according to claim 8 to compile individual key data for a drug portion to be verified by performing steps c) and d) according to one of the claims 1-7, and to compare said individual key data with characteristic key data.

## Revendications

1. Procédé de mesure et de vérification de portions de médicaments, dans lequel
a) les données clés caractéristiques d'un type de médicament sont compilées à l'aide d'une caméra calibrée (1) d'un dispositif de mesure (10) de telle sorte que :
au moins une image numérique d'une portion de médicament (50) d'un type de médicament est générée à l'aide de la caméra calibrée (1) du dispositif de mesure (10),
l'image numérique générée est transférée vers une unité de commande (2),
les données clés caractéristiques pour le type de médicament sont compilées par l'unité de commande (2) à l'aide de paramètres de calibrage connus KP(MESS) de la caméra (1) du dispositif de mesure (10) et de l'image numérique ;
b) les données clés caractéristiques du type de médicament sont stockées dans un dispositif de stockage (20),
c) les données clés caractéristiques sont récupérées à partir d'un dispositif de vérification (30) ou transmises à celui-ci,
d) les données clés individuelles pour une portion de médicament à vérifier sont compilées à l'aide d'une caméra calibrée (31) du dispositif de vérification (30) et comparées aux données clés caractéristiques, en ce que :
au moins une image numérique d'une portion de médicament à vérifier est générée à l'aide d'une caméra calibrée (31) du dispositif de vérification (30),
l'image numérique générée de la portion de médicament à vérifier est transférée vers une unité de commande (32),
les données clés individuelles pour la portion de médicament à vérifier sont déterminées par l'unité de commande (32) sur la base de paramètres de calibrage connus KP(VERI) de la caméra (31) du dispositif de vérification (30) et de l'image numérique, et
l'unité de commande (32) compare les données clés individuelles avec les données clés caractéristiques du type de médicament correspondant et, sur la base des résultats de la comparaison, vérifie ou rejette la portion de médicament.

2. Procédé de mesure et de vérification de portions de médicament selon la revendication 1, **caractérisé en ce que** les données clés caractéristiques sont stockées via une connexion de transmission (8) dans un dispositif de stockage (20) qui est conçu comme un stockage en nuage sur Internet (21).

3. Procédé de mesure et de vérification de portions de médicament selon la revendication 1 ou 2, **caractérisé en ce que** le dispositif de vérification (30) du dispositif de stockage (20) transmet un code d'authentification, le dispositif de stockage (20) vérifie ledit code d'authentification, et les données clés caractéristiques sont récupérées par ou transmises au dispositif de vérification (30) uniquement si ledit code d'authentification est valide.

4. Procédé de mesure et de vérification de portions de médicaments selon l'une des revendications 1 à 3, **caractérisé en ce que**, lors de leur compilation, les données clés caractéristiques reçoivent un horodatage.

5. Procédé de mesure et de vérification de portions de médicaments selon la revendication 4, **caractérisé en ce que**, avant la comparaison des données clés caractéristiques avec les données clés individuelles de la portion de médicament à vérifier, le dispositif de vérification (30) vérifie l'horodatage des données clés caractéristiques associées aux données clés individuelles, et récupère à partir du dispositif de stockage (20) et met à jour les données clés caractéristiques, lorsqu'un écart de temps prédéterminé t1 est dépassé.

6. Procédé de mesure et de vérification de portions de médicaments selon l'une des revendications 1 à 5, **caractérisé en ce que**, pendant la vérification d'une compilation de plusieurs portions de médicaments, l'unité de commande (32) du dispositif de vérification (30) vérifie les données clés caractéristiques associées aux portions de médicaments à vérifier afin de déterminer si toutes les portions de médicaments de la compilation sont clairement vérifiables.

7. Procédé de mesure et de vérification de portions de médicaments selon l'une des revendications 1 à 6, **caractérisé en ce que** les paramètres de calibrage KP(MESS), KP(VERI) des caméras (1 ; 31) du dispositif de mesure et du dispositif de vérification (10 ; 30) sont générés **en ce que** des images numériques d'une multiplicité d'objets de calibrage KO sont générées avec les caméras et comparées à des données clés pour les objets de calibrage afin de générer les paramètres de calibrage.

8. Système de mesure et de vérification de portions de médicaments, comprenant
un dispositif de mesure, comprenant des moyens pour compiler des données clés caractéristiques d'un type de médicament en effectuant l'étape a) selon l'une des revendications 1 à 7,
un dispositif de stockage (20), comprenant des moyens pour stocker les données clés caractéristiques en effectuant l'étape b) selon l'une des revendications 1 à 7, et
un dispositif de vérification (30), comprenant des moyens pour compiler des données clés individuelles d'une portion de médicament à vérifier et pour comparer les données clés individuelles avec les données clés caractéristiques en effectuant les étapes c) et d) selon l'une des revendications 1 à 7.

9. Produit de programme informatique, comprenant des commandes pour inciter le dispositif de mesure (10) du système selon la revendication 8 à compiler des données clés caractéristiques d'un type de médicament en exécutant les étapes a) et b) selon l'une des revendications 1 à 7, et pour stocker lesdites données clés caractéristiques dans un dispositif de stockage (20), et comprenant des commandes pour inciter le dispositif de vérification (30) du système selon la revendication 8 à compiler des données clés individuelles pour une portion de médicament à vérifier en exécutant les étapes c) et d) selon l'une des revendications 1 à 7, et à comparer lesdites données clés individuelles avec des données clés caractéristiques.
